Europäisches Patentamt

European Patent Office

Office européen des brevets

(19)

(11) Veröffentlichungsnummer: **0 268 899 B1**

(12) **EUROPÄISCHE PATENTSCHRIFT**

(45) Veröffentlichungstag der Patentschrift: **09.10.91**

(51) Int. Cl.⁵: **G21C 3/32**, G21C 3/18

(21) Anmeldenummer: **87116351.5**

(22) Anmeldetag: **05.11.87**

(54) **Druckwasserkernreaktor.**

(30) Priorität: **18.11.86 DE 3639401**

(43) Veröffentlichungstag der Anmeldung:
**01.06.88 Patentblatt 88/22**

(45) Bekanntmachung des Hinweises auf die
Patenterteilung:
**09.10.91 Patentblatt 91/41**

(84) Benannte Vertragsstaaten:
**BE CH DE ES FR GB LI NL SE**

(56) Entgegenhaltungen:
**DE-A- 3 308 956**
**US-A- 3 211 627**
**US-A- 4 326 922**
**US-A- 4 483 818**

(73) Patentinhaber: **SIEMENS AKTIENGESELL-
SCHAFT**
**Wittelsbacherplatz 2**
**W-8000 München 2(DE)**

(72) Erfinder: **Kiehlmann, Horst-Dieter, Dr.
Dipl.-Phys.**
**Killingerstrasse 28**
**W-8520 Erlangen(DE)**
Erfinder: **Wunderlich, Frank, Dr. Dipl.-Phys.**
**Jahnstrasse 17**
**W-8526 Bubenreuth(DE)**

EP 0 268 899 B1

## Beschreibung

Die Erfindung betrifft einen Druckwasserkernreaktor nach dem Gattungsbegriff des Patentanspruchs 1.

Ein Kernreaktorbrennelement für einen derartigen Druckwasserkernreaktor ist aus Proc. ANS Topical Meeting, Orlando 1985, Vol. 2, pp 7-13 bis 7-28 bekannt. Die Enden der Kernbrennstoffsäule in einem Brennstab dieses bekannten Kernreaktorbrennelementes sind durch $UO_2$ mit natürlicher Konzentration an U 235-Atomkernen gebildet. Zwischen diesen beiden Enden besteht die Kernbrennstoffsäule aus angereichertem $UO_2$, in dem die Konzentration an mit thermischen Neutronen spaltbaren U 235-Kernen höher als die natürliche Konzentration ist. Die aus $UO_2$ mit natürlicher Konzentration bestehenden Enden der Kernbrennstoffsäule sollen die Neutronenökonomie im Reaktorkern des Druckwasserkernreaktors verbessern.

Die Kernbrennstoffsäule befindet sich in einem Hüllrohr des Brennstabes, das aus Metall, in der Regel aus einer Zirkoniumlegierung besteht. Auf der wasserseitigen Oberfläche dieses Hüllrohres bilden sich während des Betriebes im Druckwasserkernreaktor Korrosionsschichten aus Oxid, deren Dicke von der Hüllrohrtemperatur abhängig ist und die zulässige Standzeit des Brennstabes und damit auch des Kernreaktorbrennelementes im Kernreaktor begrenzen kann. Infolge des über die Längsrichtung des Brennstabes unsymmetrischen Temperaturprofils im Flüssigwasser des Druckwasserkernreaktors ist die Dicke dieser Korrosionsschicht ebenfalls über die Länge des Brennstabes unsymmetrisch d.h. ein deutliches Maximum dieser Dicke tritt in der Nähe des Brennstabendes auf, das sich am Austritt des Reaktorkerns für das Flüssigwasser befindet. Ist die Korrosionsschicht maßgeblich für die Standzeit des Brennstabes und damit des Kernreaktorbrennelementes im Druckwasserkernreaktor, so ist dieses Maximum der Dicke der Korrosionsschicht der zahlenmäßige Maßstab für die zulässige Standzeit.

Der Erfindung liegt die Aufgabe zugrunde, diese zulässige Standzeit des Brennstabes und damit auch des Kernreaktorbrennelementes im Druckwasserkernreaktor zu verlängern.

Zur Lösung dieser Aufgabe hat der Druckwasserkernreaktor der eingangs erwähnten Art erfindungsgemäß die Merkmale des kennzeichnenden Teiles des Patentanspruchs 1. Die dort angesprochenen mittleren Anreicherungen sind alle arithmetische Mittelwerte.

Dadurch wird die Heizflächenbelastung in Watt pro $cm^2$ der wasserseitigen Oberfläche des Hüllrohres über dessen Länge derart modifiziert, daß sich die Dicke der auf der Wasserseite des Hüllrohres des Brennstabes bildenden Korrosionsschicht vergleichmäßigt und die zulässige Standzeit für den Brennstab im Druckwasserkernreaktor verlängert wird.

Die Unteransprüche sind auf Maßnahmen gerichtet, durch die die Dicke der Korrosionsschicht auf der Wasserseite des Hüllrohres des Brennstabes noch weiter vergleichmäßigt und die zulässige Standzeit des Brennstabes und damit des Kernreaktorbrennelementes im Druckwasserkernraktor noch weiter erhöht wird.

Aus der US-PS 4 483 818 sind zwar Brennstäbe mit Kernbrennstoffsäulen bekannt, die am Kühlmitteleintritt eines Reaktorkerns eine höhere mittlere Anreicherung als am Kühlmittelaustritt haben; es handelt sich jedoch um einen Siedewasserkernreaktor, bei dem das Kühlmittel am Kühlmittelaustritt Wasserdampf ist, der direkt zu einer Turbine geführt wird. Durch die Anreicherungsverteilung soll eine axiale Vergleichmäßigung der Leistung der Brennstäbe erzielt werden, während eine besondere Verdickung der Korrosionsschicht am Kühlmittelaustrittsende der Hüllrohre der Brennstäbe bei einem Siedewasserkernreaktor nicht eintritt.

Aus der JP-A-60239696 (= US-PS 4 631 166) ist ferner ein Kernreaktorbrennelement zur hohen Ausnutzung von Kernbrennstoff in einem Druckwasserkernreaktor bekannt mit zwei in Längsrichtung des Kernreaktorbrennelementes übereinander und koaxial zueinander angeordneten Brennstäben, von denen ein Brennstab an einem beliebigen Stabende über einen Teil seiner Stablänge Kernbrennstoff mit einer geringeren Anreicherung an spaltbaren Atomkernen enthält als über den Rest der Stablänge.

Die Erfindung und ihre Vorteile seien anhand der Zeichnung an einem Ausführungsbeispiel näher erläutert:

FIG 1    zeigt die Profile der Fertigungsanreicherung der Brennstoffsäulen in Prozent von zwei Brennstäben über der Länge der jeweiligen Brennstoffsäule als Abszisse.

FIG 2    zeigt die Dickenprofile in μm der Korrosionsschicht auf der Wasserseite der Hüllrohre dieser Brennstäbe am Ende ihrer Standzeit in einem Druckwasserkernreaktor über der Länge der Brennstoffsäule als Abszisse.

FIG 3    zeigt schematisch einen erfindungsgemäßen Druckwasserkernreaktor.

Die Länge der Brennstoffsäulen in den beiden Brennstäben beträgt 3900 mm. Die Brennstoffsäulen sind durch aneinandergereihte Tabletten gebildet, die alle eine Höhe von 11 mm und einen Durchmesser von 9,11 mm haben und die aus $UO_2$ bestehen. Die Hüllrohre der beiden Brennstäbe sind identisch und bestehen aus einer Zirkonium-Zinn-Eisen-Chrom-Legierung. Sie haben einen Außendurchmesser von 10,75 mm und eine Wanddikke von 0,72 mm.

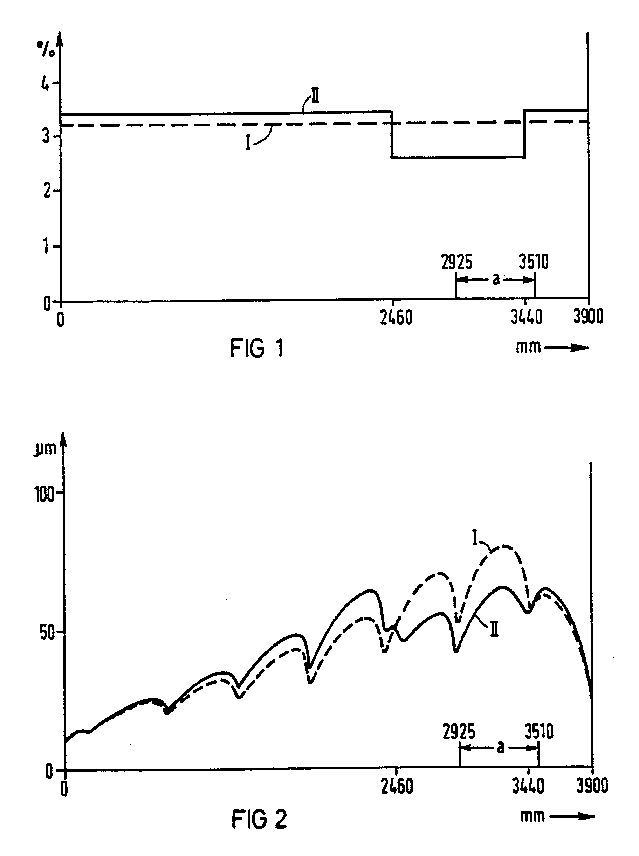

In dem einen einen Vergleichsbrennstab darstellenden Brennstab hat die Kernbrennstoffsäule überall über ihre Länge entsprechend der gestrichelten Geraden I in FIG 1 eine Fertigungsanreicherung von 3,2 % U 235.

Nach einer Standzeit von 3 Jahren im Druckwasserkernreaktor hat sich auf der Wasserseite des Hüllrohres dieses Vergleichsbrennstabes eine Korrosionsschicht gebildet, deren Dickenprofil über die Länge der Brennstoffsäule die gestrichelte Kurve I in FIG 2 wiedergibt.

Demgegenüber ist die Verteilung der Fertigungsanreicherung in der Brennstoffsäule im zweiten, erfindungsgemäß ausgebildeten Brennstab durch die durchgehende Linie II in FIG 1 dargestellt. Die Anreicherung an U 235 beträgt 2,6 % im Bereich von 2460 mm bis 3440 mm vom Ende der Kernbrennstoffsäule am Eintritt des Reaktorkerns für das Flüssigwasser bei 0 mm. Außerhalb dieses Bereiches hat die Kernbrennstoffsäule überall eine Anreicherung an U 235 von 3,4 %. Damit sind die Grenzen des Verarmungsbereichs a, der eine über diesen Verarmungsbereich a gemittelte Anreicherung kleiner als die über die gesamte Säulenlänge von 3900 mm gemittelte Anreicherung hat, 2925 mm und 3510 mm vom Ende der Kernbrennstoffsäule am Eintritt des Reaktorkerns für das Flüssigwasser bei 0 mm entfernt.

In FIG 2 zeigt die durchgehende Kurve II das Dickenprofil der Korrosionsschicht auf der Außenseite des Hüllrohres des zweiten Brennstabes ebenfalls nach einer Standzeit dieses zweiten Brennstabes von 3 Jahren im Druckwasserkernreaktor.

Es zeigt sich, daß die Dicke der Korrosionsschicht in ihrem Maximalbereich nach der Kurve II erheblich niedriger ist als im Maximalbereich nach der Kurve I. Dies bedeutet eine vergrößerte zulässige Standzeit im Druckwasserkernreaktor für den erfindungsgemäß ausgebildeten zweiten Brennstab.

Die Minima der Kurven I und II in FIG 2 haben sich durch Abstandhalter ausgebildet, die zum Kernreaktorbrennelement im Druckwasserkernreaktor gehören.

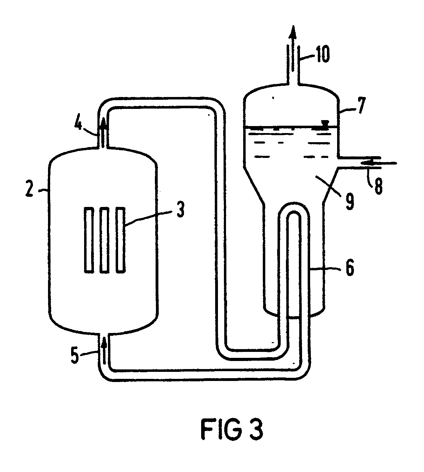

Nach FIG 3 hat ein Druckwasserkernreaktor einen Druckbehälter 2, in dem sich ein Reaktorkern aus Kernreaktorbrennelementen 3 mit Brennstäben wie oben beschrieben und mit einer Kernbrennstoffsäule beispielsweise der durchgehenden Linie II in FIG 1 befindet.

Der Austritt 4 für Flüssigwasser des Druckbehälters 2 und damit auch des Reaktorkerns mit den Kernreaktorbrennelementen 3 ist an einem Ende eines Primärrohres 6 eines Dampferzeugers 7 und der Eintritt 5 für Flüssigwasser des Druckbehälters 2 und damit auch des Reaktorkernes ist am anderen Ende des Primärrohres 6 angeschlossen. Der durch den Druckbehälter 2 und das Primärrohr 6 gebildete Primärkreis ist abgeschlossen, so daß sich in diesem Primärkreis und damit auch im Reaktorkern kein Wasserdampf bilden kann. Wasserdampf bildet sich auf der Sekundärseite des Dampferzeugers 7, der einen Zuführstutzen 8 für Speisewasser 9 und einen Austrittsstutzen 10 für Dampf hat, der von diesem Austrittsstutzen 10 beispielsweise zu einer nicht dargestellten Dampfturbine geführt wird.

**Patentansprüche**

1. Druckwasserkernreaktor mit einem Reaktorkern, in dem in einem Brennstab eines Kernreaktorbrennelementes (3) eine über ihre Länge gesehen unterschiedlich stark mit spaltbaren Atomkernen angereicherte Kernbrennstoffsäule, insbesondere aus Uranoxid und/oder Uran-Plutoniummischoxid, angeordnet ist und der an dem einen Ende des Brennstabes und damit des Kernreaktorbrennelementes (3) einen Eintritt (5) für Flüssigwasser als Kühlmittel und am anderen Ende einen Austritt (4) für das Flüssigwasser bildet, die beide zum Primärrohr (6) eines Dampferzeugers (7) führen, **dadurch gekennzeichnet,** daß die über die Hälfte der Kernbrennstoffsäule am Austritt (4) für das Flüssigwasser gemittelte Anreicherung kleiner ist als die über die andere Hälfte gemittelte Anreicherung und/oder daß die Kernbrennstoffsäule einen Verarmungsbereich (a) hat, in dem die über diesen Verarmungsbereich gemittelte Anreicherung kleiner ist als die über die gesamte Säulenlänge gemittelte Anreicherung und dessen beide Grenzen einen Abstand vom Säulenende am Austritt (4) für das Flüssigwasser haben, der 10 % und 25 % der gesamten Säulenlänge beträgt.

2. Druckwasserkernreaktor nach Anspruch 1, **dadurch gekennzeichnet,** daß die Anreicherung in Stufen vom Säulenende am Eintritt für das Flüssigwasser zum anderen Säulenende hin abnimmt.

3. Druckwasserkernreaktor nach Anspruch 2, **dadurch gekennzeichnet,** daß die Anreicherung am anderen Säulenende wieder ansteigt.

4. Druckwasserkernreaktor nach Anspruch 1, **dadurch gekennzeichnet,** daß die beiden Säulenenden durch Natururan oder abgereichertes Uran gebildet sind, das eine kleinere Konzentration an U 235-Atomkernen hat als Natururan.

5. Druckwasserkernreaktor nach Anspruch 1, **da-**

durch gekennzeichnet, daß die über die Hälfte der Kernbrennstoffsäule am Austritt für das Flüssigwasser gemittelte Anreicherung um 1 % bis 30 %, vorzugsweise um 3 % bis 15 %, kleiner ist als die über die gesamte Säulenlänge gemittelte Anreicherung.

6. Druckwasserkernreaktor nach Anspruch 1, **dadurch gekennzeichnet,** daß die über den Verarmungsbereich gemittelte Anreicherung um 5 % bis 50 %, vorzugsweise um 10 % bis 30 %, kleiner ist als die über die gesamte Säulenlänge gemittelte Anreicherung.

## Claims

1. A pressurized water nuclear reactor comprising a reactor core, in which there is situated in a fuel rod of a nuclear reactor fuel element (3) a nuclear fuel column, enriched with fissionable nuclei to a variable extent considered along its length, in particular formed of uranium oxide and/or uranium-plutonium mixed oxide, and which at one end of the fuel rod and therefore of the nuclear reactor fuel element (3) there is an inlet (5) for the liquid water as cooling agent and, at the other end, an outlet (4) for the liquid water, which both lead to the primary tube (6) of a steam generator (7), characterised in that the average enrichment over one half of the nuclear fuel column at the outlet (4) for the liquid water is less than the average enrichment over the other half and/or in that the nuclear fuel column has a depleted region (a), in which the average enrichment over this depleted region is less than the average enrichment over the entire column length and both its limits are spaced from the column end at the outlet (4) for the liquid water, which amounts to 10 % and 25% of the total column length.

2. A pressurized water nuclear reactor according to claim 1, characterised in that the enrichment decreases in stages from the column end at the inlet for the liquid water to the other column end.

3. A pressurized water nuclear reactor according to claim 2, characterised in that the enrichment on the other column end increases again.

4. A pressurized water nuclear reactor according to claim 1, characterised in that both ends of the column are formed by natural uranium or depleted uranium which has a smaller concentration of $^{235}U$ atomic nuclei than natural uranium.

5. A pressurized water reactor according to claim 1, characterised in that the average enrichment over the half of the nuclear fuel column at the outlet for the liquid water is less by 1 % to 30 %, preferably by 3% to 15%, than the average enrichment over the total column length.

6. A pressurized water nuclear reactor according to claim 1, characterised in that the average enrichment over the depletion region is less by 5% to 50%, preferably by 10% to 30%, than the average enrichment over the total column length.

## Revendications

1. Réacteur nucléaire à eau sous pression, comprenant un coeur de réacteur, dans lequel dans un crayon combustible d'un assemblage combustible (3) de réacteur nucléaire est disposé un empilement de matière combustible nucléaire, notamment en oxyde d'uranium et/ou en oxyde mixte d'uranium et de plutonium, qui est très enrichi en noyaux atomiques fissiles de manière différente sur sa longueur, et qui forme, à l'une des extrémités du crayon combustible et donc de l'assemblage combustible (3) de réacteur nucléaire, une entrée (5) pour de l'eau liquide servant d'agent de refroidissement et, à l'autre extrémité, une sortie (4) pour l'eau liquide, lesquelles mènent toutes deux au tube primaire (6) d'un générateur de vapeur (7), caractérisé en ce que l'enrichissement moyen sur la moitié de l'empilement de matière combustible à la sortie (4) pour l'eau liquide est inférieur à l'enrichissement moyen sur l'autre moitié et/ou en ce que l'empilement de matière combustible nucléaire a une région d'appauvrissement (a), dont l'enrichissement moyen est inférieur à l'enrichissement moyen sur toute la longueur de l'empilement et dont les deux limites sont à une distance de l'extrémité de l'empilement à la sortie (4), qui représente 10 % et 25 % de la longueur totale de l'empilement.

2. Réacteur nucléaire à eau sous pression suivant la revendication 1, caractérisé en ce que l'enrichissement décroit par paliers de l'extrémité de l'empilement à l'entrée pour l'eau liquide à l'autre extrémité de l'empilement.

3. Réacteur nucléaire à eau sous pression suivant la revendication 2, caractérisé en ce que l'enrichissement croît à nouveau à l'autre extrémité de l'empilement.

4. Réacteur nucléaire à eau sous pression suivant la revendication 1, caractérisé en ce que les deux extrémités de l'empilement sont formées par de l'uranium naturel ou par de l'uranium appauvri, qui a une concentration en noyaux atomiques de U 235 plus petite que l'uranium naturel.

5. Réacteur nucléaire à eau sous pression suivant la revendication 1, caractérisé en ce que l'enrichissement moyen, sur la moitié de l'empilement de matière combustible nucléaire à la sortie pour l'eau liquide, est inférieur de 1 % à 30 % et, de préférence, de 3 % à 15 %, à l'enrichissement moyen sur la longueur totale de la colonne.

6. Réacteur nucléaire à eau sous pression suivant la revendication 1, caractérisé en ce que l'enrichissement moyen sur la région d'appauvrissement est inférieur de 5 à 50 % et, de préférence, de 10 à 30 % à l'enrichissement moyen sur la longueur totale de la colonne.

FIG 1

FIG 2

FIG 3